# EUROPÄISCHE PATENTSCHRIFT

(11) **EP 1 099 575 B1**
(45) Veröffentlichungstag und Bekanntmachung des Hinweises auf die Patenterteilung: **11.02.2004**
(21) Anmeldenummer: 00123476.4
(22) Anmeldetag: 07.11.2000
(51) Int. Cl.: B60D 1/46

(54) **Kupplungsvorrichtung für ein Kraftfahrzeug**
Coupling device for an automotive vehicle
Dispositif d'accouplement pour un véhicule automobile

(30) Priorität: 09.11.1999 DE 19953833
(43) Veröffentlichungstag der Anmeldung: 16.05.2001
(73) Patentinhaber: Sauermann, Hans, D-86558 Freinhausen (DE)
(72) Erfinder: Sauermann, Hans, D-86558 Freinhausen (DE)
(74) Vertreter: Sasse, Volker, Dipl.-Ing.

(56) Entgegenhaltungen:
- EP-A- 0 184 489
- EP-A- 0 346 885
- US-A- 2 375 970
- US-A- 3 863 955

## Beschreibung

Die Erfindung betrifft eine Kupplungsvorrichtung für ein Kraftfahrzeug, insbesondere für einen Traktor gemäß dem Oberbegriff des Patentanspruchs 1.

Aus der EP 0 346 885 B1 ist eine Kupplungsvorrichtung für ein Kraftfahrzeug bekannt, die zwei vordere und zwei hintere Lenker aufweist. Die freien Enden dieser Lenker halten einen Kupplungsträger, an dessen Ende eine Kupplung vorgesehen ist. Dabei sind die vorderen Lenker am vorderen Ende und die hinteren Lenker im mittleren Bereich des Kupplungsträgers gehalten. Durch diese besondere Aufhängung des Kupplungsträgers ist die Kupplung entlang einer bogenförmigen Bahn verstellbar. Diese Bahn verläuft ausgehend von einer abgesenkten Stellung der Kupplung zunächst im wesentlichen nach oben und anschließend nach vorne und oben, so daß eine in die Kupplung eingehängte Öse zunächst angehoben und anschließend zusätzlich zum Zugfahrzeug herangezogen wird. Zur Verstellung des Kupplungsträgers ist oberhalb des Getriebekastens ein Getriebemotor vorgesehen, der über ein Kurbelgestänge am Kupplungsträger angreift.

Der Erfindung liegt die Aufgabe zugrunde, einen Kupplungsvorrichtung der eingangs genannten Art zu schaffen, die einfach zu betätigen ist, wobei der Zugang zu elektrischen bzw. hydraulischen Anschlüssen oberhalb des Getriebekastens in keiner Weise behindert wird.

Diese Aufgabe wird erfindungsgemäß mit den Merkmalen des Patentanspruchs 1 gelöst.

Die Kupplungsvorrichtung gemäß Anspruch 1 weist mindestens einen hinteren und vorderen Lenker auf, an deren Enden ein Kupplungsträger gelenkig gehalten ist. Diese, im allgemeinen als "Hitsch" bezeichnete Anordnung, gestattet ein Absenken und Anheben einer am Kupplungsträger gehaltenen Kupplung. Diese Kupplung wird dabei entlang einer von den Lenkern und dem Kupplungsträger bestimmten Bahn verstellt, die, ausgehend von einer abgesenkten Stellung, zunächst im wesentlichen nach oben und anschließend nach vorne und oben verläuft. Eine schwere Deichsel eines Anhängers wird daher von der Kupplungsvorrichtung angehoben, ohne daß hierzu Muskelkraft erforderlich wäre. Insbesondere bei schweren Deichseln ist dies von besonderer Bedeutung, da diese sonst so lange in angehobener Stellung gehalten werden müßten, bis der Traktor in die korrekte Lage rangiert wurde, so daß die Deichsel mit der Kupplung verbunden werden kann. Dies ist bei der erfindungsgemäßen Ausbildung der Kupplungsvorrichtung nicht erforderlich, so daß der Ankupplungsvorgang insbesondere auch von einer einzigen Person mit geringstem Einsatz an Muskelkraft durchgeführt werden kann. Die Verstellung des Kupplungsträgers erfolgt erfindungsgemäß durch mindestens einen Hydraulikzylinder, der einerseits am Kupplungsträger und andererseits an einen heckseitigen Getriebekasten des Kraftfahrzeugs angelenkt ist. Vorzugsweise sind zwei Hydraulikzylinder vorgesehen, damit der Kupplungsträger während seiner Verstellung nicht um seine Längsachse verschwenkt wird. Durch den Einsatz eines Hydraulikzylinders kann ein Getriebe zur Umsetzung der Drehbewegung eines Motors in die erforderliche Hubbewegung entfallen. Da die getriebekastenseitige Anlenkung des Hydraulikzylinders unterhalb oder in Höhe der Getriebekastenoberkante vorgesehen ist, bleibt der Raum oberhalb des Getriebekastens frei von Anbauten und beweglichen Teilen, so daß ein ungehinderter Zugang zu elektrischen bzw. hydraulischen Anschlüssen im Heckbereich des Fahrzeugs gewährleistet ist. Da der Hydraulikzylinder beidseitig über die Anlenkung hinausragt, besitzt dessen Kolben trotz der nahe am Kupplungsträger vorgesehenen getriebekastenseitigen Anlenkung einen ausreichend großen Verstellweg. Damit kann die Anlenkung des Hydraulikzylinders am Kupplungsträger relativ weit von den vorderen und hinteren Lenkern entfernt erfolgen, so daß nur eine relativ geringe Zugkraft des Hydraulikzylinders erforderlich ist. Damit kann der Hydraulikzylinder eine entsprechend geringe Kolbenquerschnittsfläche aufweisen, was sich wiederum vorteilhaft auf seine Außenabmessungen auswirkt. Die erfindungsgemäße Kupplungsvorrichtung hat außerdem den besonderen Vorteil, daß die Unfallgefährdung der Bedienungsperson beim Ein- oder Ausstecken von Geräten an den heckseitigen Anschlüssen entsprechend reduziert ist. Da keinerlei Getriebeteile über den Getriebekasten ragen, besteht keine Gefahr, daß eine Hand der bedienenden Person eingeklemmt wird, wenn gleichzeitig versehentlich die Kupplungsvorrichtung verstellt wird.

Um eine möglichst günstige Hebelwirkung für den Hydraulikzylinder zu erzielen, ist es gemäß Anspruch 2 vorteilhaft, wenn dieser den Kupplungsträger hinter dem hinteren Lenker erfaßt. Vorzugsweise wird der Hydraulikzylinder im Endbereich des Kupplungsträgers angelenkt, der der Anlenkung des vorderen Lenkers gegenüberliegt. Der Hydraulikzylinder greift in diesem Fall nahe der Kupplung an, so daß der Hydraulikzylinder in geringstmöglicher Weise belastet wird.

Steht der Hydraulikzylinder gemäß Anspruch 3 wenigstens 10 %, vorzugsweise wenigstens 30 % seiner Gesamtlänge über die getriebekastenseitige Anlenkung über, so reicht der Verstellweg des Hydraulikkolbens im allgemeinen aus, um den Kupplungsträger nahe dem Kupplungsglied zu erfassen. Damit wird der Hydraulikzylinder mit der geringstmöglichen Kraft beaufschlagt, so daß er mit relativ kleinem Durchmesser ausgebildet werden kann. Dies wirkt sich wiederum vorteilhaft auf die Zugänglichkeit zu heckseitigen Armaturen des Kraftfahrzeugs aus.

In jenen Fällen, in denen der Getriebekasten relativ niedrig gebaut ist, reicht der zur Verfügung stehende Weg zwischen der Getriebekastenoberkante und dem Boden nicht aus, um den Kupplungsträger in die Transportstellung zu bringen. In diesem Fall ist es gemäß Anspruch 4 günstig, wenn lediglich der Hydraulikzylinder über die Getriebekastenoberkante hinausragt, um einen ausreichend großen Verstellweg des Hydraulikzylinders sicherzustellen. Da der Hydraulikzylinder einen relativ kleinen Außendurchmesser aufweist, behindert er den Zugang zu den heckseitigen Armaturen des Kraftfahrzeugs im Gegensatz zum relativ breiten Schwenklager kaum, so daß hierdurch kein Nachteil entsteht.

Zur Bildung der getriebekastenseitigen Anlenkung hat sich die Ausbildung gemäß Anspruch 5 bewährt. Der Hydraulikzylinder weist in diesem Fall zwei zueinander fluchtende Achsstummel auf, die vorzugsweise am Hydraulikzylinder außenseitig festgeschweißt sind. Diese Achsstummel sind in einem Schwenklager abgestützt, das wiederum am Getriebekasten gehalten ist. Vorzugsweise befinden sich die Achsstummel etwa mittig am Hydraulikzylinder, so daß dieser oberhalb und unterhalb des Schwenklagers etwa gleich weit ausschwenkt. Auf diese Weise ist sichergestellt, daß der Hydraulikzylinder ausreichend weit ausschwenken kann, um die Kupplung bis zur Fahrbahn absenken zu können, andererseits das Schwenklager aber nicht höher als die Getriebekastenoberkante befestigt ist.

Eine einfache und gleichzeitig stabile Ausbildung eines Schwenklagers in Form von Befestigungswinkeln mit zueinander fluchtenden Lagerbohrungen ergibt sich aus Anspruch 6. Das Schwenklager besteht in diesem Fall aus einfachen Blechbiegeteilen, die kostengünstig hergestellt werden können. Um die erforderliche Schwenkfreiheit für den Hydraulikzylinder sicherzustellen, müssen die Befestigungswinkel, in Fahrzeuglängsrichtung gesehen, eine ausreichende lichte Weite aufweisen, wobei die Lagerbohrungen vorzugsweise in Schenkelmitte vorgesehen sind. Diese Lagerbohrungen nehmen die Achsstummel der Hydraulikzylinder schwenkbar auf.

Zur Vermeidung einer Klemmwirkung der Achsstummel im Schwenklager bei seitlicher Krafteinwirkung auf die Kupplung ist es gemäß Anspruch 7 vorteilhaft, die Lagerbohrungen im wesentlichen in vertikaler Richtung mit einem Spiel zu versehen. Die Lagerbohrungen sind vorzugsweise oval ausgebildet, wobei die größte lichte Weite der Lagerbohrung in etwa in vertikaler Richtung vorgesehen ist. Damit kann der Hydraulikzylinder um ein gewisses Maß quer zur Fahrtrichtung des Fahrzeugs schwenken, so daß ein Klemmen im Schwenklager zuverlässig verhindert wird.

Insbesondere, wenn seitliche Kräfte auf die Kupplung einwirken, werden die Befestigungswinkel von den Achsstummeln geringfügig auseinandergedrückt, so daß mit der Zeit die Gefahr besteht, daß die Achsstummel nicht mehr ordnungsgemäß in den Lagerbohrungen gehalten sind. Um die Achsstummel nicht unnötig lang ausbilden zu müssen, ist es gemäß Anspruch 8 günstig, wenn die Befestigungswinkel den Hydraulikzylinder allseitig umfassen und hinter dem Hydraulikzylinder zugfest verbunden sind. Vorzugsweise überlappen sich die Befestigungswinkel hinter dem Hydraulikzylinder um ein gewisses Maß und sind im Überlappungsbereich von einem Befestigungsmittel, insbesondere einer Schraubverbindung, durchsetzt. Dies verhindert zuverlässig jegliche Verformung der Befestigungswinkel.

Damit die Lagerbohrungen der einzelnen Befestigungswinkel für die verschiedenen Hydraulikzylinder korrekt zueinander fluchtend ausgerichtet sind, ist es gemäß Anspruch 9 günstig, diese auf einer gemeinsamen Trägerplatte zu halten. Damit ist die Ausrichtung der Lagerbohrungen der Befestigungswinkel unabhängig von der jeweiligen Montage. Die Trägerplatte kann unmittelbar oder mittelbar über eine Lasche an einem Lagerflansch des Getriebekastens festgelegt sein.

Um den Hydraulikzylinder und das Schwenklager möglichst wenig zu belasten, ist es gemäß Anspruch 10 vorteilhaft, wenn der Hydraulikzylinder eine annähernd vertikale Lage einnimmt. Vorzugsweise wird der Hydraulikzylinder in etwa symmetrisch um die vertikale Lage verschwenkt.

Der Erfindungsgegenstand wird beispielhaft anhand der Zeichnung erläutert, ohne den Schutzumfang zu beschränken.

Es zeigt:
- Figur 1: eine teilweise geschnittene Seitenansicht einer Kupplungsvorrichtung mit abgesenktem Kupplungshaken,
- Figur 2: die Kupplungsvorrichtung gemäß Figur 1 mit angehobenem Kupplungshaken,
- Figur 3: eine Schnittdarstellung eines Schwenklagers für den Hydraulikzylinder und
- Figur 4: eine Schnittdarstellung des Schwenklagers gemäß Figur 3 entlang der Schnittlinie IV-IV.

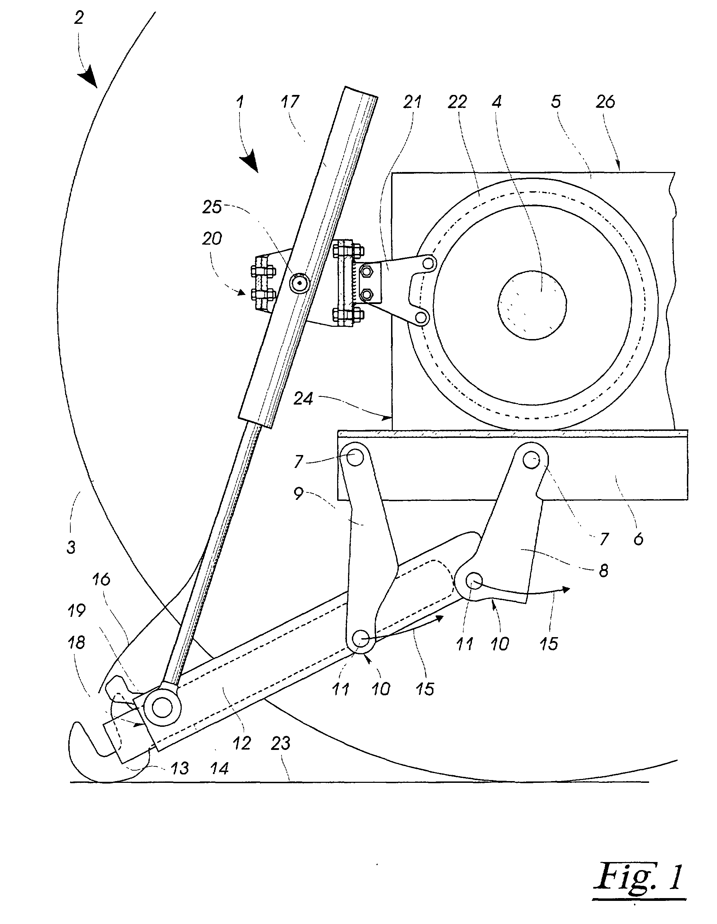

Figur 1 zeigt eine Kupplungsvorrichtung 1 für ein Kraftfahrzeug 2, insbesondere einen Traktor, der lediglich durch ein Hinterrad 3 mit Antriebsachse 4 und einem Getriebekasten 5 angedeutet ist.

Am Getriebekasten 5 ist unterseitig ein Rahmen 6 der Kupplungsvorrichtung 1 stationär gehalten, der aus einem nach unten und hinten offenen U-Profil gebildet ist. An diesem Rahmen 6 sind Lager 7 zur schwenkbaren Abstützung zweier vorderer Lenker 8 und zweier hinterer Lenker 9 vorgesehen. Im Bereich der freien Enden 10 der Lenker 8, 9 sind Schwenklager 11 vorgesehen, über die ein Kupplungsträger 12 an den Lenkern 8, 9 schwenkbar gehalten ist.

Im Kupplungsträger 12 ist eine Kupplung 13 lösbar gehalten, die lediglich beispielhaft als Kupplungshaken ausgebildet ist. Es ist jedoch auch vorstellbar, jede beliebige andere Kupplungsform am Kupplungsträger 12 zu halten. Es ist insbesondere daran gedacht, an einem Schaft 14 beidendig unterschiedliche Kupplungen 13 zu halten, so daß die Kupplung 13 durch einfaches Umdrehen des Schaftes 14 dem vorgesehenen Verwendungszweck angepaßt werden kann.

Durch die besondere Aufhängung des Kupplungsträgers 12 an den vorderen 8 und hinteren Lenkern 9 wird erreicht, daß beim Verschwenken dieser Lenker 8, 9 in Richtung 15 die Kupplung 13 entlang einer Bahn 16 verstellt wird, die ausgehend von der in Figur 1 dargestellten, abgesenkten Lage zunächst im wesentlichen vertikal nach oben und anschließend nach vorne und oben verläuft.

Zur Verstellung des Kupplungsträgers 12 sind zwei Hydraulikzylinder 17 vorgesehen, die am hinteren Ende 18 des Kupplungsträgers 12 über Schwenklager 19 angreifen. Die Hydraulikzylinder 17 sind in Schwenklagern 20 abgestützt, welche über Laschen 21 an einem Lagerflansch 22 des Getriebekastens 5 gehalten sind.

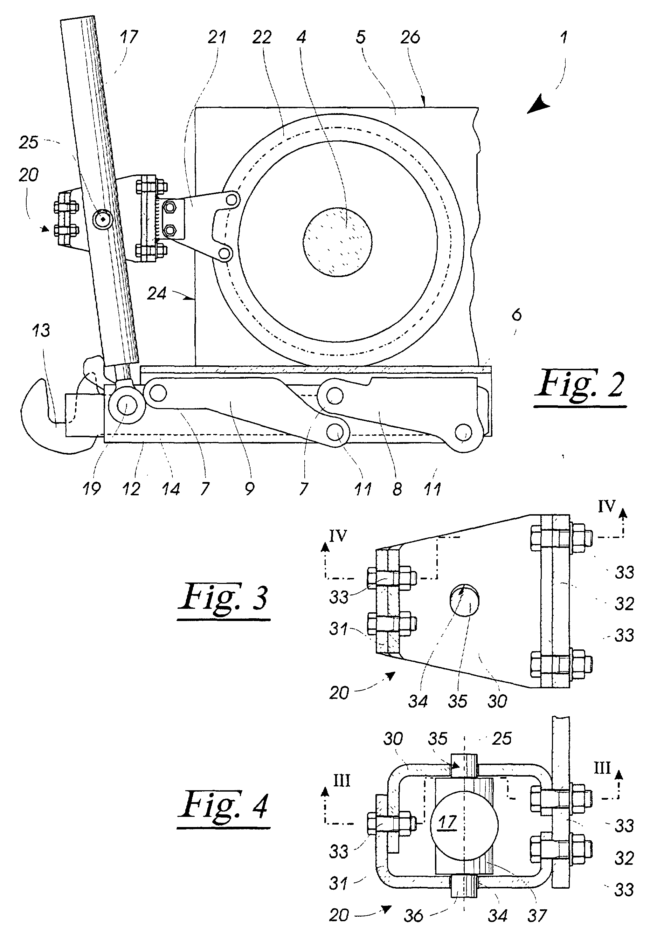

Um an das Kraftfahrzeug 2 einen Anhänger anzukuppeln, wird dessen Deichsel zunächst mit der Kupplung 13 verbunden, was aufgrund deren, auf die Fahrbahn 23 abgesenkten und weit hinter das Heck 24 des Kraftfahrzeugs 2 zurückreichenden Lage einfach und ohne größeren Kraftaufwand durchführbar ist. Anschließend wird der Kupplungsträger 12 mittels der Hydraulikzylinder 17 verschwenkt, wobei die Kupplung 13 durch die Anlenkung der vorderen 8 und hinteren Lenker 9 entlang der Bahn 16 verstellt wird. Die Kupplung 13 wird daher zunächst mit der daran gehaltenen Deichsel des Anhängers angehoben und anschließend nach oben und vorne verschoben, bis sie die in Figur 2 dargestellte Lage nahe dem Fahrzeugheck 24 einnimmt. Die Sicherung der Anhängerdeichsel in der Kuppelstellung wird über nicht dargestellte Sicherungsmittel bewirkt, die am Rahmen 6 der Kupplungsvorrichtung 1 gehalten sind.

Die Schwenklager 20 sind über die Laschen 21 derart am Lagerflansch 22 des Getriebekastens 5 gehalten, daß eine Schwenkachse 25 der Hydraulikzylinder 17 unterhalb oder in Höhe der Getriebekastenoberkante 26 vorgesehen ist. Vorzugsweise befinden sich die gesamten Schwenklager 20 unterhalb oder in Höhe der Getriebekastenoberkante 26.

Die Figuren 3 und 4 zeigen einander zugeordnete Schnittdarstellungen entlang der Schnittlinien III-III bzw. IV-IV der Schwenklager 20 zur Abstützung der Hydraulikzylinder 17. Diese Schwenklager werden im wesentlichen von U-förmig gebogenen Befestigungswinkeln 30, 31 gebildet, welche auf einer gemeinsamen Trägerplatte 32 mittels Befestigungsmitteln 33 gehalten sind.

Die Befestigungswinkel 30, 31 umfassen den Hydraulikzylinder 17 allseitig und sind hinter diesem über Befestigungsmittel 33 zugfest gehalten. Damit werden die Befestigungswinkel 30, 31 auch bei Einwirkung von Seitenkräften durch den Hydraulikzylinder 17 in Lage gehalten. Die Befestigungswinkel 30, 31 sind von zueinander fluchtenden Lagerbohrungen 34 durchsetzt, die in vertikaler Richtung oval ausgebildet sind. Damit führen Kippbewegungen des Hydraulikzylinders 17 aufgrund von seitlichen Schwenkbewegungen des Kupplungsträgers 12 nicht zu einem Klemmen des Schwenklagers 20.

Am Hydraulikzylinder 17 sind zueinander fluchtende Achsstummel 35 gehalten. Diese Achsstummel 35 sind in ihrem Durchmesser nach außen stufenförmig verjüngt, wobei lediglich der verjüngte Teil 36 der Achsstummel die Lagerbohrung 34 durchsetzt. Dem gegenüber weist der breitere Teil 37 der Achsstummel 35 einen größeren Durchmesser als die Lagerbohrung 34 auf, so daß dieser innenseitig am Befestigungswinkel 30, 31 anliegt. Durch diese Ausbildung der Achsstummel 35 ist gewährleistet, daß der Hydraulikzylinder 17 ausreichend sicher seitlich geführt ist.

An der Trägerplatte 32 sind die Schwenklager 20 beider Hydraulikzylinder 17 gehalten, so daß eine korrekte, fluchtende Ausrichtung der Lagerbohrungen 34 aller Befestigungswinkel 30, 31 gewährleistet ist.

### Bezugszeichenliste

- 1: Kupplungsvorrichtung
- 2: Kraftfahrzeug
- 3: Hinterrad
- 4: Antriebsachse
- 5: Getriebekasten
- 6: Rahmen
- 7: Lager
- 8: vorderer Lenker
- 9: hinterer Lenker
- 10: freies Ende des Lenkers
- 11: Schwenklager
- 12: Kupplungsträger
- 13: Kupplung
- 14: Schaft
- 15: Verschwenkrichtung
- 16: Bahn
- 17: Hydraulikzylinder
- 18: hinteres Ende des Kupplungsträgers
- 19, 20: Schwenklager
- 21: Lasche
- 22: Lagerflansch
- 23: Fahrbahn
- 24: Heck
- 25: Schwenkachse
- 26: Getriebekastenoberkante
- 30,31: Befestigungswinkel
- 32: Trägerplatte
- 33: Befestigungsmittel
- 34: Lagerbohrung
- 35: Achsstummel
- 36: verjüngter Teil des Achsstummels
- 37: breiter Teil des Achsstummels

## Patentansprüche

1. Kupplungsvorrichtung für ein Kraftfahrzeug (2) mit einem heckseitigen Getriebekasten, insbesondere für einen Traktor, wobei die Kupplungsvorrichtung (1) mindestens einen vorderen (8) und hinteren Lenker (9) aufweist, deren freie Enden (10) mit einem eine Kupplung (13) haltenden Kupplungsträger (12) gelenkig verbunden sind, wobei der hintere Lenker (9) zwischen der Kupplung (13) und dem vorderen Lenker (8) am Kupplungsträger (12) angelenkt ist, **dadurch gekennzeichnet, daß** zur Verstellung des Kupplungsträgers (12) mindestens ein Hydraulikzylinder (17) vorgesehen ist, der einerseits am Kupplungsträger (12) und andererseits an einem heckseitigen Getriebekasten (5) des Kraftfahrzeugs (2) angelenkt ist, wobei die getriebekastenseitige Anlenkung (25) des mindestens einen Hydraulikzylinders (17) unterhalb oder in Höhe der Getriebekastenoberkante (26) vorgesehen ist und der mindestens eine Hydraulikzylinder (17) die Anlenkung (25) beidseitig überragt.

2. Kupplungsvorrichtung nach Anspruch 1, **dadurch gekennzeichnet, daß** mindestens einer der Hydraulikzylinder (17) am Kupplungsträger (12) hinter dem hinteren Lenker (9) angelenkt ist.

3. Kupplungsvorrichtung nach Anspruch 1 oder 2, **dadurch gekennzeichnet, daß** der Hydraulikzylinder (17) die Anlenkung (25) beidseitig um wenigstens 10 %, vorzugsweise wenigstens 30 % seiner Länge bei eingefahrenem Kolben überragt.

4. Kupplungsvorrichtung nach mindestens einem der Ansprüche 1 bis 3, **dadurch gekennzeichnet, daß** der Hydraulikzylinder (17) die Getriebekastenoberkante (26) überragt.

5. Kupplungsvorrichtung nach mindestens einem der Ansprüche 1 bis 4, **dadurch gekennzeichnet, daß** am Hydraulikzylinder (17) zueinander fluchtende Achsstummel (35) festgelegt sind, die in einem am Getriebekasten (5) gehaltenen Schwenklager (20) abgestützt sind.

6. Kupplungsvorrichtung nach Anspruch 5, **dadurch gekennzeichnet, daß** das Schwenklager (20) von am Getriebekasten (5) festgelegten Befestigungswinkeln (30, 31) gebildet ist, die zueinander fluchtende Lagerbohrungen (34) zur Aufnahme der Achsstummel (35) des Hydraulikzylinders (17) aufweisen.

7. Kupplungsvorrichtung nach Anspruch 6, **dadurch gekennzeichnet, daß** die Lagerbohrungen (34) der Befestigungswinkel (30, 31) im wesentlichen in vertikaler Richtung mit Spiel versehen sind.

8. Kupplungsvorrichtung nach Anspruch 6 oder 7, **dadurch gekennzeichnet, daß** die Befestigungswinkel (30, 31) den Hydraulikzylinder (17) allseitig umfassen und hinter diesem zugfest verbunden sind.

9. Kupplungsvorrichtung nach mindestens einem der Ansprüche 6 bis 8, **dadurch gekennzeichnet, daß** die Befestigungswinkel (30, 31) aller Hydraulikzylinder (17) auf einer gemeinsamen, am Getriebekasten (5) festlegbaren Trägerplatte (32) gehalten sind.

10. Kupplungsvorrichtung nach mindestens einem der Ansprüche 1 bis 9, **dadurch gekennzeichnet, daß** der Hydraulikzylinder (17) eine annähernd vertikale Lage einnimmt.

## Claims

1. Coupling device for a motor vehicle (2) having a rear gearbox, in particular for a tractor, the coupling device (1) having at least one front (8) and one rear link (9), the free ends (10) of which are connected in an articulated manner to a coupling carrier (12) holding a coupling (13), the rear link (9) being articulated on the coupling carrier (12) between the coupling (13) and the front link (8), **characterized in that**, for the adjustment of the coupling carrier (12) at least one hydraulic cylinder (17) is provided, which is articulated, on the one hand, on the coupling carrier (12), and on the other hand, on a rear gearbox (5) of the motor vehicle (2), the gearbox-side articulation (25) of the at least one hydraulic cylinder (17) being provided below or level with the gearbox top edge (26), and the at least one hydraulic cylinder (17) projecting beyond the articulation (25) on both sides.

2. Coupling device according to Claim 1, **characterized in that** at least one of the hydraulic cylinders (17) is articulated on the coupling carrier (12) behind the rear link (9).

3. Coupling device according to Claim 1 or 2, **characterized in that** the hydraulic cylinder (17) projects beyond the articulation (25) on both sides by at least 10%, preferably at least 30%, of its length, with the piston retracted.

4. Coupling device according to at least one of Claims 1 to 3, **characterized in that** the hydraulic cylinder (17) projects beyond the gearbox top edge (26).

5. Coupling device according to at least one of Claims 1 to 4, **characterized in that** the hydraulic cylinder (17) has secured to it axle stubs (35) which are in alignment with one another and are supported in a pivot bearing (20) held on the gearbox (5).

6. Coupling device according to Claim 5, **characterized in that** the pivot bearing (20) is formed by fastening angles (30, 31) which are secured to the gearbox (5) and have bearing bores (34), aligned with one another, for receiving the axle stubs (35) of the hydraulic cylinder (17).

7. Coupling device according to Claim 6, **characterized in that** the bearing bores (34) of the fastening angles (30, 31) are provided with play essentially in the vertical direction.

8. Coupling device according to Claim 6 or 7, **characterized in that** the fastening angles (30, 31) surround the hydraulic cylinder (17) on all sides and are connected behind the latter so as to be resistant to tensile stress.

9. Coupling device according to at least one of Claims 6 to 8, **characterized in that** the fastening angles (30, 31) of all the hydraulic cylinders (17) are held on a common carrier plate (32) capable of being secured to the gearbox (5).

10. Coupling device according to at least one of Claims 1 to 9, **characterized in that** the hydraulic cylinder (17) assumes an approximately vertical position.

## Revendications

1. Dispositif d'accouplement pour un véhicule automobile (2) avec boîte de vitesses arrière, en particulier pour un tracteur, le dispositif d'accouplement (1) comprenant au moins un bras oscillant avant (8) et un bras oscillant arrière (9), dont les extrémités libres (10) sont reliées de manière articulée à un support d'accouplement (12) qui porte une pièce d'accouplement (13), le bras oscillant arrière (9) étant articulé au support d'accouplement (12) entre la pièce d'accouplement (13) et le bras oscillant avant (8), **caractérisé en ce que**, pour le réglage du support d'accouplement (12), il est prévu au moins un vérin hydraulique (17) qui est articulé, d'une part, au support d'accouplement (12) et, d'autre part, à une boîte de vitesses (5) arrière du véhicule automobile (2), l'articulation (25), du côté de la boîte de vitesses, du au moins un vérin hydraulique (17) étant prévu en dessous ou à hauteur du bord supérieur (26) de la boîte de vitesses et le au moins un vérin hydraulique (17) dépassant de part et d'autre l'articulation (25).

2. Dispositif d'accouplement selon la revendication 1, **caractérisé en ce que** l'un au moins des vérins hydrauliques (17) est articulé au support d'accouplement (12) derrière le bras oscillant arrière (9).

3. Dispositif d'accouplement selon la revendication 1 ou 2, **caractérisé en ce que** le vérin hydraulique (17) dépasse de part et d'autre l'articulation (25) sur au moins 10 %, de préférence au moins 30 % de sa longueur quand le piston est rentré.

4. Dispositif d'accouplement selon l'une au moins des revendications 1 à 3, **caractérisé en ce que** le vérin hydraulique (17) dépasse le bord supérieur (26) de la boîte de vitesses.

5. Dispositif d'accouplement selon l'une au moins des revendications 1 à 4, **caractérisé en ce que** des tourillons (35) mutuellement alignés sont fixés au vérin hydraulique (17), lesquels sont en appui dans un palier de pivotement (20) monté sur la boîte de vitesses (5).

6. Dispositif d'accouplement selon la revendication 5, **caractérisé en ce que** le palier de pivotement (20) est formé par des cornières de fixation (30, 31) fixées à la boîte de vitesses (5), lesquelles comportent des alésages de palier (34) mutuellement alignés pour recevoir les tourillons (35) du vérin hydraulique (17).

7. Dispositif d'accouplement selon la revendication 6, **caractérisé en ce que** les alésages de palier (34) des cornières de fixation (30, 31) sont prévus avec jeu sensiblement dans la direction verticale.

8. Dispositif d'accouplement selon la revendication 6 ou 7, **caractérisé en ce que** les cornières de fixation (30, 31) entourent de toutes parts le vérin hydraulique (17) et sont assemblées derrière celui-ci de manière à résister à la traction.

9. Dispositif d'accouplement selon l'une au moins des revendications 6 à 8, **caractérisé en ce que** les cornières de fixation (30, 31) de tous les vérins hydrauliques (17) sont montées sur une plaque de support (32) commune propre à être fixée à la boîte de vitesses (5).

10. Dispositif d'accouplement selon l'une au moins des revendications 1 à 9, **caractérisé en ce que** le vérin hydraulique (17) prend une position approximativement verticale.
